Europäisches Patentamt

(19) European Patent Office

Office européen des brevets

(11) Publication number: **0 217 500**
**A2**

## (12) EUROPEAN PATENT APPLICATION

(21) Application number: **86305631.3**

(22) Date of filing: **22.07.86**

(51) Int. Cl.⁴: **G 09 F 15/00**
**G 09 F 1/12**
**//A47F1/06**

(30) Priority: **23.07.85 GB 8518544**

(43) Date of publication of application:
**08.04.87 Bulletin 87/15**

(84) Designated Contracting States:
**BE DE FR GB IT NL**

(71) Applicant: **GRAPHIC FORMING LIMITED**
**30-31 Clerkenwell Green**
**London, EC1R 0DU(GB)**

(72) Inventor: **Davies, Rupert**
**30/31 Clerkenwell Green**
**London, E.C.1.(GB)**

(74) Representative: **Jenkins, Richard Gray et al,**
**R.G.C. Jenkins & Co. 12-15, Fetter Lane**
**London EC4A 1PL(GB)**

(54) **Resilient edging strip assembly.**

(57) An edging strip assembly for a display panel comprising a resilient channel section rail having two side walls adapted to fit over an edge of the panel and a web adapted to act as a resilient hinge to urge the walls of the rail against the opposite surfaces of the panel and at least one resilient flap strip which is pivotally attached to a wall of the rail, characterised in that the flap strip is snap rotatable from a closed position in which it is clamped under resilient tension against a surface of the panel to an open position in which it extends generally outwardly from the surface of the panel, the flap strip being held in both the open and closed position by the resilient clamping pressure of the rail.

FIG. 3.

EP 0 217 500 A2

## RESILIENT EDGING STRIP ASSEMBLY

The present invention relates to a resilient edging strip assembly for a display panel designed to enable flexible sheet material to be quickly and easily attached to and removed from the panel.

It is well known to display advertising material on panels at a point of sale location, for instance indoors in a shop, or out of doors, at a garage or filling station. In many cases it is desirable to change the nature of the advertising material at frequent intervals. If this entails replacing the complete display panel, it can involve considerable cost, particularly if the display panel is for use out of doors and is designed to withstand weather conditions. It is therefore desirable to provide a durable, permanent display panel onto which sheets of replaceable advertising material can be quickly and easily attached and removed. Hitherto, this has been done by using an adhesive which involves problems in both securely attaching the sheet material and enabling it to be removed relatively easily or by fastening members or studs which may not be secure and which again involve considerable labour in both attaching and removing the sheet material.

In order to overcome some of these problems it has been proposed in U.K. Patent No. 2010673 of Segerstad to provide a strip assembly comprising a main strip adapted to grip the edge of a display panel and two flap strips which are pivotally hinged to the main strip. The main strip and the flap strips have cooperating locking elements enabling the flap strips to be locked in a position in which they can clamp a sheet of display material against the panel. We have found that this known type of strip assembly has a limited application because it can only accommodate a relatively small range of panel thicknesses. It is also necessary to form the terminal portions of the flap strips from a different and more resilient material than the main part of the flap strips in order to achieve the required gripping characteristics. This makes the manufacture of the components relatively costly. A further disadvantage is that the flap strips can only accommodate the sheet material and cannot in addition clamp a protective sheet of glass or transparent plastics on the panel.

It is therefore an object of the present invention to provide an edging strip assembly for a display panel which is economic to manufacture, which can be used with a wide range of panel thickness and which enables flexible sheet material and a protective sheet or plastics or the like to be quickly and easily attached or removed from the panel.

Accordingly, the present invention provides an edging strip assembly for a display panel comprising a resilient channel section rail having two side walls adapted to fit over an edge of the panel and a web adapted to act as a resilient hinge to urge the walls of the rail against the opposite surfaces of the panel and at least one resilient flap strip which is pivotally attached to a wall of the rail, characterised in that the flap strip is snap rotatable from a closed position in which it is clamped under resilient tension against a surface of the panel to an open position in which it extends generally outwardly from the surface of the panel, the flap strip being held in both the open and closed position by the resilient clamping pressure of the rail.

The present invention will now be described in detail with reference to the accompanying drawings in which:

Figure 1 is a plan view of a display panel and edging strip assembly of the present invention, partly broken away;

Figure 2 is a section taken on the line II-II of Figure 1;

Figure 3 is a view of a detail of Figure 2; and

Figures 4, 5 and 6 are illustrations of different methods of connecting the edging strip assemblies of Figures 1 and 2 together.

In the drawings, a display panel is indicated generally at 10 which is trimmed by an edging strip assembly, indicated generally at 11. The display panel 10 may be formed from fibreboard or plastics material so as to be relatively rigid, to act as a support for flexible sheet material such as a poster or picture 12.

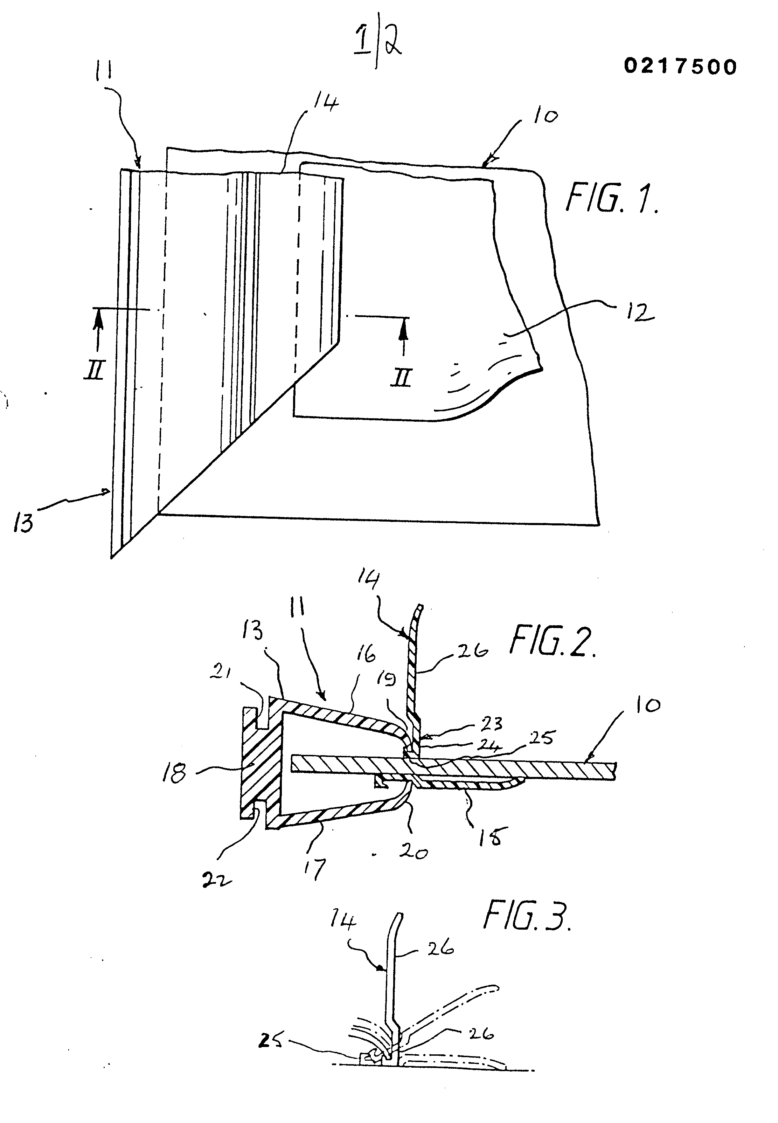

The edging strip assembly 11 comprises a rail 13 and two similar flap strips 14 and 15. The rail 13 and the flap strips 14 and 15 are mitred, as shown in Figure 1, and it will be understood that a rail and two flap strips are provided and mounted on each of the four sides of the panel to complete the panel assembly.

The rail 13 is formed from a suitable synthetic plastics material such as polyvinylchloride or polypropylene so as to be relatively tough but resilient. The rail 13 comprises two side walls 16 and 17 joined by a web 18 which acts as a resilient hinge for the side walls 16 and 17. The side walls 16 and 17 converge in a direction away from the web 18 and are formed with longitudinally extending inturned flanges 19 and 20. The web 18 is formed with longitudinally extending grooves 21 and 22 adapted to receive connecting members in a manner to be described below.

The two flap strips are similar and only the flap strip 14 will be described in detail. The flap strip 14 has a hook formation 23 at one end which interengages with the inturned flange 19 on the side wall 16 so as to pivotally attach the flap strip 2 to the rail. Adjacent the hook formation 23, the flap strip 14 has two flat locating surfaces 24 and 25 arranged at right angles to one another, the purpose and function of which will be described below. Extending away from the hook formation 23, the flap strip has a bowed portion 26 which is concave towards the panel 10 and which is adapted in use to clamp the poster 12 against the panel. The flap strip 14 is made from a similar material to the rail 11, for instance polypropylene, so as to be similarly tough but resilient.

As can be seen from Figure 3, when the hook formations 23 of the flap strips 14 and 15 are engaged with the inturned flanges 19 and 20 of the rail 11, the flap strips 14 and 15 are loosely pivotally connected to the rail. If the panel 10 is now inserted between the flap strips and forced into the rail 11, as shown in Figure 2, the side walls 16 and 17 are forced apart so that the flanges 19 and 20 exert a clamping force on the flap strips 14 and 15 so as to urge them resiliently against the panel 10. When the panel edge is located within the rail, each flap strip is rotatable through approximately 90° from the closed position demonstrated by the flap strip 15 in Figure 2 in which the poster 12 is clamped against the panel 10 by the bowed portion 26 of the flap strip to the open position demonstrated by the flap strip 14. In the open position, the locating surface 25 of the flap strip is clamped against the panel and in the closed position the locating surface 24 is clamped against the panel. As the locating surfaces 24 and 25 are arranged at right angles, a snap action is achieved as the flap strip is lifted and passes through 45° as shown in Figure 3 so that the flap strip is held firmly either in the open or in the closed position in which a resilient clamping pressure is exerted on the panel to hold the poster in position.

In use, the display panel is assembled with the edging strip assembly comprising the rail and flap strips around four sides of the panel. The flap strips on one or both sides of the panel can then be lifted manually relatively easily from the closed to the open position, each flap strip snapping upwardly and remaining firmly in the open position while a poster 12 is placed on the panel. Each flap strip is then snapped downwardly onto the panel to clamp the poster in position. The operation can then be repeated on the other side of the panel if so desired. In order to remove a poster from the panel, all that is necessary is for each flap strip to be lifted manually and snapped upwardly into the open position to enable the poster to be removed.

If it is necessary to protect the poster this can be done by lifting the flap strips and inserting a relatively thick sheet of transparent plastics or glass over the poster and then snapping the flap strips down onto the plastics sheet to retain it in position over the poster.

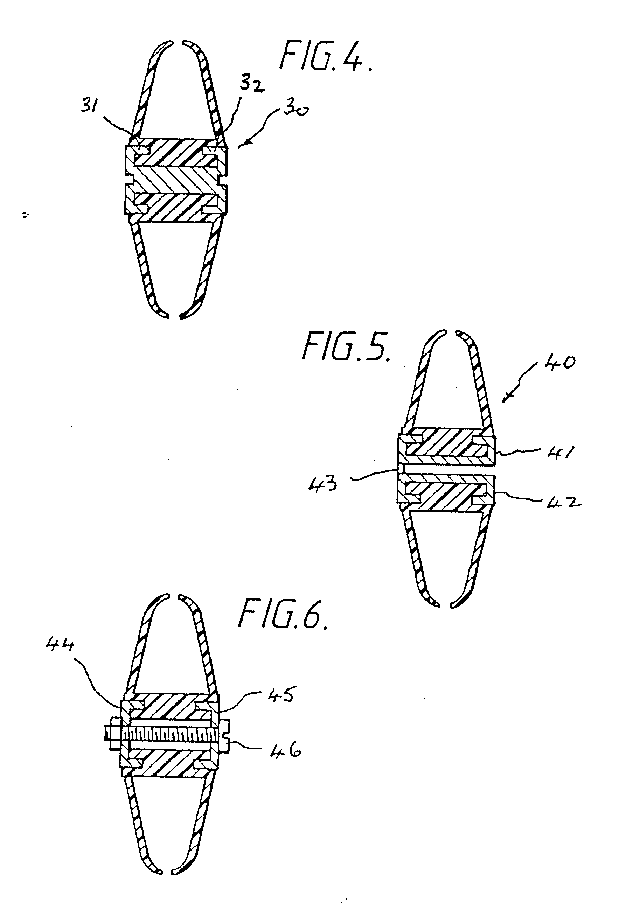

In order to join two panels together, a linking rail 30, shown in Figure 4, may be employed, the linking rail having two pairs of similar inturned flanges 31 and 32 which are adapted to slidably locate in the grooves 21 and 22 in the web of a rail 11. Alternatively, a linking rail 40 as shown in Figure 5 may be employed which has two similar portions 41 and 42 joined by a flexible hinge 43. In yet another alternative method of attaching panels together, as shown in

8.

Figure 6, two channel section linking rails 44 and 45 which may be made from plastics or metal, are engaged in the grooves 21 and 22 of two adjacent rails and clamped together by a bolt 46. It will be apreciated that by selecting the appropriate linking rails a plurality of panels can be joined together at angles to one another or in the same general plane. The panels may also be hung singly or in groups.

CLAIMS

1. An edging strip assembly for a display panel comprising a resilient channel section rail having two side walls adapted to fit over an edge of the panel and a web adapted to act as a resilient hinge to urge the walls of the rail against the opposite surfaces of the panel and at least one resilient flap strip which is pivotally attached to a wall of the rail, characterised in that the flap strip is snap rotatable from a closed position in which it is clamped under resilient tension against a surface of the panel to an open position in which it extends generally outwardly from the surface of the panel, the flap strip being held in both the open and closed position by the resilient clamping pressure of the rail.

2. An assembly as claimed in claim 1, characterised in that two flap strips are provided each being pivotally attached to one of the side walls of the rail.

3. An assembly as claimed in claim 1 or claim 2, characterised in that the side walls of the rail converge in a direction away from the web of the rail and are adapted to be forced apart by insertion of the panel edge into the rail.

4. An assembly as claimed in any preceding claim, characterised in that each rail has an inturned flange remote from the web and the or each flap strip has a hook formation interengaged with the inturned flange of a side wall of the rail to pivotally attach the flap strip to the rail.

5. An assembly as claimed in claim 4 characterised in that the or each flap strip is formed with two flat locating surfaces arranged at right angles, one of the flat locating surfaces being clamped against the panel in the closed position of the flap strip and the other in the open position.

6. An assembly as claimed in any preceding claim wherein the or each flap strip is bowed and concave towards the panel when assembled.

7. A display panel trimmed on all sides with an edging strip assembly as claimed in any preceding claim.

8. An edging strip assembly for a display panel substantially as described herein with reference to the accompanying drawings.

9. A display panel substantially as described herein with reference to the accompanying drawings.

0217500

FIG. 1.

11 14 10

12

II II

13

14

FIG. 2.

11 26

13 16 19

21

18 23

24 25

10

22 20 15

17

FIG. 3.

14 26

25 26

FIG.4.

31    32    30

FIG.5.

40

41

43    42

FIG.6.

44

45

46